# EUROPÄISCHE PATENTSCHRIFT

(11) **EP 2 514 581 B1**
(45) Veröffentlichungstag und Bekanntmachung des Hinweises auf die Patenterteilung: **15.07.2015**
(21) Anmeldenummer: 11003351.1
(22) Anmeldetag: 21.04.2011
(51) Int. Cl.: B29C 55/28, B29C 35/04, B29D 23/00, E04F 17/04, F16L 9/12, F16L 7/00

(54) **Verfahren zur Herstellung eines Rohres**
Method for producing a tube
Procédé pour la fabrication d'un tuyau

(43) Veröffentlichungstag der Anmeldung: 24.10.2012
(73) Patentinhaber: Zehnder Group International AG, 5722 Gränichen (CH)
(72) Erfinder: Jansen, Paul, 8191 JD Wapenveld (NL)
(74) Vertreter: Stenger, Watzke & Ring

(56) Entgegenhaltungen:
- EP-A2- 1 264 717
- WO-A2-2010/129975
- JP-A- 57 022 016
- US-A- 3 911 962
- US-A- 5 403 120
- US-A1- 2010 282 351

## Beschreibung

Die vorliegende Erfindung betrifft ein Verfahren zur Herstellung eines Rohres sowie ein Rohr. Insbesondere betrifft die Erfindung Lüftungsrohre.

Im Stand der Technik sind Lüftungsrohre bzw. Lüftungskanäle in großem Umfang bekannt. Ursprünglich waren es vor allem aus Zinkblech gebildete Vierkantrohre, die zur Ausbildung großer Lüftungseinheiten in Gebäuden und dergleichen positioniert wurden. Hier müssen eine große Zahl unterschiedlicher Längen hergestellt werden. Die Rohre sind teuer und die baulichen Randbedingungen müssen auf die Rohre angepasst werden. Später ging man dazu über, Kunststoffrohre, die biegsam sind, oder Rohrsysteme aus Flachrohren, mit entsprechenden Winkeln, Fittings und dergleichen, in Decken, Wände oder Böden zu verlegen.

Im Stand der Technik sind auch biegsame Oval- bzw. Flachrohre bekannt, die aus einem doppelwandigen Rohr bestehen, wobei das innere Rohr eine strömungstechnisch und hygienetechnisch glatte Oberfläche bereitstellt. Bei geringer Einbauhöhe können diese Leitungen mit ausreichendem Querschnitt versehen werden und in Böden oder Decken verlegt werden. Allerdings bedarf es auch hier unter Umständen umfassender baulicher Eingriffe und es müssen gegebenenfalls Bögen, Anschlussteile und dergleichen verwendet werden.

Insbesondere aber muss das Rohr hergestellt und mit großem Transportvolumen und Gewicht bereitgestellt werden. Auch muss es umfangreich vor Ort mechanisch bearbeitet werden. All dies macht insbesondere bei Renovierungen, Nachrüstungen und dergleichen den Einsatz entsprechender Lüftungstechnik sehr aufwendig.

Andererseits geht die heutige Entwicklung dahin, dass bei zunehmender Gebäudeisolation von sowohl großen lndustriebauten als auch Bürogebäuden, aber auch im Bereich kleiner Gebäude zunehmend die Lüftungstechnik gefragt ist, denn ein ausreichendes Raumklima kann nur noch mittels Lüftung geschaffen werden.

Aus dem Stand der Technik ist gemäß der JP 57022016 A ferner ein Verfahren zur Herstellung eines Rohres bekannt, gemäß welchem ein faserverstärktes Kompositmaterial um einen flexiblen Schlauch gewunden und das so hergestellte Zwischenprodukt in ein Metallrohr eingeführt wird. Das Metallrohr wird anschließend in die gewünschte Form gebogen und der innen liegende Schlauch mit Druckluft beaufschlagt und erhitzt, so dass das Kompositmaterial aushärtet.

Aus der US 3,911,962 A ist ein feuerfestes, flexibles Lüftungsrohr bekannt geworden. Dieses verfügt über ein Glasfasergeflecht, welches in einen wärmeaushärtbaren Harz eingebettet ist.

Die WO 2010/129975 A2 beschreibt ein Verfahren zur Herstellung eines Strukturelements, wobei ein mit einem Schlauchgewebe ummantelter flexibler Schlauch in die gewünschte Form gebracht und anschließend ein auf das Schlauchgewebe aufgebrachter Kunststoff ausgehärtet wird.

Die US 2010/282351 A1 betrifft ein Verfahren zur Auskleidung eines beschädigten Rohres mit einem Inliner, der mit einem wärmeaushärtbaren Harz imprägniert ist. Der Inliner wird in das zu reparierende Rohr eingeführt und mit Druckluft beaufschlagt, wodurch der Inliner an die innere Fläche des Rohres gepresst wird. Anschließend wird ein heißer Wasserstrahl oder Wasserdampf in den Inliner gegeben, so dass das Harz aushärtet.

Aus der US 5,403,120 A ist ein Verfahren zum Auskleiden eines defekten Rohres mittels eines Inliners bekannt geworden, wobei der Inliner aus einem thermoplastischen Material besteht. Durch Erhitzen wird der Inliner biegsam und kann in das Rohr eingeführt werden. Anschließend wird der Inliner mit Wasserdampf aufgeblasen und gleichzeitig abgekühlt, wodurch er in der aufgeblasenen Form fixiert wird.

Aus der EP 1 264 717 A2 ist schließlich noch ein Leitungsbausatz für Kfz-Klimaanlagen bekannt geworden, für dessen Herstellung ein Innenrohr mit einer Faserhülle überzogen und mit einer Kunststoffimprägnierung versehen wird. Das Zwischenprodukt wird in einem Formhohlraum eingebracht, mit Innendruck beaufschlagt und eventuell aufgeheizt, damit sich die Imprägnierung gleichmäßig verteilt und nach dem Aushärten dem Innenrohr ausreichend Festigkeit verleiht.

Ausgehend vom vorbeschriebenen Stand der Technik liegt der vorliegenden Erfindung die A u f g a b e zugrunde, ein Rohr bzw. ein Verfahren zur Herstellung eines Rohres bereitzustellen, welches auch bei ungünstigen baulichen Gegebenheiten im Rahmen einer Nachrüstung möglichst flexibel verlegbar ist, in der Herstellung und im Transport einfach und nach Installation auch strömungstechnisch verbessert ist.

Zur technischen L ö s u n g dieser Aufgabe wird verfahrenstechnisch vorgeschlagen ein Verfahren mit den Merkmalen des Anspruches 1. Weitere Vorteile und Merkmale ergeben sich aus den Unteransprüchen.

Mit der Erfindung wird vorgeschlagen, einen flexiblen Schlauch mit einem aushärtbaren Kunststoff zu versehen. Der Schlauch wird dann verlegt, mit Luft aufgeblasen und der Kunststoff ausgehärtet. Auf diese Weise wird in situ ein Rohr mit den erforderlichen Bögen und Windungen sowie baulichen Umgehungen und Führungen gebildet. Das Rohr ist über lange Strecken verbindungs- und nahtfrei. In vorteilhafter Weise wird ein thermoaktivierbarer Kunststoff genommen. Dieser kann gemäß einem vorteilhaften Vorschlag direkt den Schlauch und damit auch das spätere Rohr bildend ausgearbeitet sein, beispielsweise durch das Weben oder Verbinden entsprechender thermoaktivierbarer und aushärtbarer Kunststoffe.

In vorteilhafter Weise wird der Schlauch mit Warmluft bzw. Heißluft beaufschlagt, so dass der Schlauch zum einen vollständig aufgeblasen wird, zum anderen zugleich der Kunststoff zur Ausbildung des Rohres aktiviert wird.

Die Ausbildung erfolgt so, dass eine glatte innere Oberfläche entsteht. Darüber hinaus ist der Querschnitt formbar, beispielsweise durch eingelegte Elemente oder durch Durchführungselemente.

Das Rohr kann in einfacher Weise mit Befestigungsbügeln fixiert werden. Auch diese können entsprechende Querschnitte aufweisen.

Mit Vorteil kann das Rohr auch durch enge Durchführungen gelegt, gebogen, gewunden und sonst wie eingebracht werden.

Am Endbereich kann das Rohr mit entsprechenden Fittings, Flanschen und dergleichen verklebt oder sonst wie verbunden werden.

Mit der Erfindung werden ein einfaches Verfahren zur Herstellung von Lüftungsrohren sowie ein einfach aufgebautes Lüftungsrohr bereitgestellt, mit welchen eine Vielzahl von Vorteilen erreicht werden können. Zum einen kann das Rohr auf einfache Weise hergestellt und platzsparend transportiert werden. Darüber hinaus kann es in nahezu beliebigen Längen verlegt werden. Es kann eng und durchführend verlegt werden. Es kann hinsichtlich des Querschnittes geformt werden.

Der nach der Erfindung vorgesehene Schlauch kann in seiner Ausgangsausgestaltung insbesondere zum Zwecke des vereinfachten Transportes aufgewickelt, aufgerollt oder gefaltet sein, ähnlich wie ein Feuerwehrschlauch im Aufbewahrungsfall. Zum Zwecke der Verlegung kann der Schlauch als dann abgewickelt und dem Verlegeweg folgend in den Verlegeraum eingebracht werden. Dies kann beispielsweise dadurch geschehen, dass der Schlauch einendseitig ergriffen und dem Verlegeweg folgend durch den Verlegeraum gezogen wird, wobei ein automatisches Abwickeln oder Abrollen des Schlauches vom Schlauchvorrat erfolgt. Sobald dann der Schlauch in den Verlegeraum eingebracht ist, kann dieser einendseitig luft- und/oder druckdicht verschlossen werden. Es folgt in der schon vorbeschriebenen Weise sodann ein Aufblähen des Schlauches mittels Luft, infolge dessen sich der Schlauch im Verlegeraum ausdehnt und eine an den Verlegeraum angepasste, optimierte Ausbreitung annimmt. Das Aufblähen des Schlauches erfolgt bevorzugter Weise mittels Warm- oder Heißluft, infolge dessen es zu einer Aktivierung des Schlauchkunststoffmaterials kommt. Nach einer Aushärtung des thermoaktivierten Schlauchkunststoffmaterials kann die zur Aufblähung des Schlauches in selbigen eingebrachte Warm- oder Heißluft aus dem nunmehr durch die Kunststoffaushärtung entstandenen Rohr entlassen werden. Fortan kann das auf diese Weise ausgebildete Rohr als Lüftungsrohr bzw. Lüftungskanal genutzt werden, wobei dieses Rohr in optimierter Weise an die Umgebungsbedingungen, insbesondere den zur Verfügung stehenden Verlegeraum anpasst ist. Dabei müssen zur Ausgestaltung des Rohres vor Ort keine baulichen Maßnahmen, insbesondere Umbaumaßnahmen ergriffen werden, da eine Verlegung des Schlauches auch im Falle verengter Verlegeräume in einfacher Weise durchgeführt werden kann und sich die spätere Ausbildung des Rohres ebenfalls in einfacher Weise an unter Umständen auch enge Verlegeräume in optimierter Weise anpassen kann.

Bei dem thermoaktivierbaren Kunststoffschlauchmaterial kann es sich bevorzugter Weise um ein thermoplastisches Material handeln, auch um eine Mischung von thermoplastischen Materialien und/oder weiteren Komponenten. Dabei wird als Kunststoffmaterial bevorzugter Weise ein solches gewählt, das eine Heißluftaktivierung bei einer Temperatur zwischen 50 und 100 C°, mehr bevorzugt zwischen 60 und 80 C°, noch mehr bevorzugt zwischen 60 und 70 C° ermöglicht. Dabei erfolgt die Thermoaktivierung bevorzugter Weise derart, dass Warm- bzw. Heißluft in entsprechender Temperatur in den Schlauch eingebracht wird. Der Schlauch ist einendseitig druckfest verschlossen, so dass ein Aufblähen des Schlauches stattfinden kann, wobei ein vorgebbarer Druck innerhalb des Schlauches eingestellt wird. Die Warm- bzw. Heißluft verbleibt für ca. zwei bis drei Minuten innerhalb des Schlauches. Innerhalb dieser Zeit findet die Aushärtung des Kunststoffes statt, das heißt durch die im Schlauch befindliche Warm- bzw. Heißluft findet eine Kunststoffvernetzung statt, die innerhalb der zwei bis drei Minuten Haltezeit aushärtet. Das Ergebnis ist ein form- und strukturstabiles Rohr, das den Anwendungserfordernissen für ein Lüftungsrohr im vollen Umfang entspricht.

Der Schlauch und damit auch das spätere Rohr kann bevorzugter Weise aus mehreren Materiallagen gebildet sein. Es ist bevorzugter Weise eine Innenlage vorgesehen, die eine zum späteren Rohrführungskanal glatte Innenoberfläche ausbildet. Diese Innenoberfläche kann darüber hinaus antibakteriell ausgebildet sein.

Als weitere Materialschicht kann eine Außenschicht vorgesehen sein, die als Schutzschicht dient und beispielsweise in Form eines Stützgewebes ausgebildet ist. Diese Außenschicht kann ferner mit einem Flammschutzmaterial behandelt sein, welches entweder außenseitig aufgebracht oder in das Material eingearbeitet ist.

Zwischen der Innenschicht und der Außenschicht können weitere Schichten vorgesehen sein, wobei als eine mittlere Schicht eine Schicht aus dem schon zuvor beschriebenen thermoaktivierbaren Kunststoff gebildet ist. Alternativ kann der wärmeaktivierbare Kunststoff auch in die Innenschicht und/oder die Außenschicht eingearbeitet sein. In diesem Fall ist die Verwendung einer Mittelschicht nicht erforderlich.

Weitere Vorteile und Merkmale der Erfindung ergeben sich aus der vorliegenden Beschreibung anhand der Figuren. Dabei zeigen:
- Figur 1: in schematischer Schnittdarstellung einen Verlegeraum mit einem eingebrachten Schlauch und
- Figur 2: in schematischer Schnittdarstellung einen Verlegeraum mit einem aus dem Schlauch nach Figur 1 gebildeten Rohr.

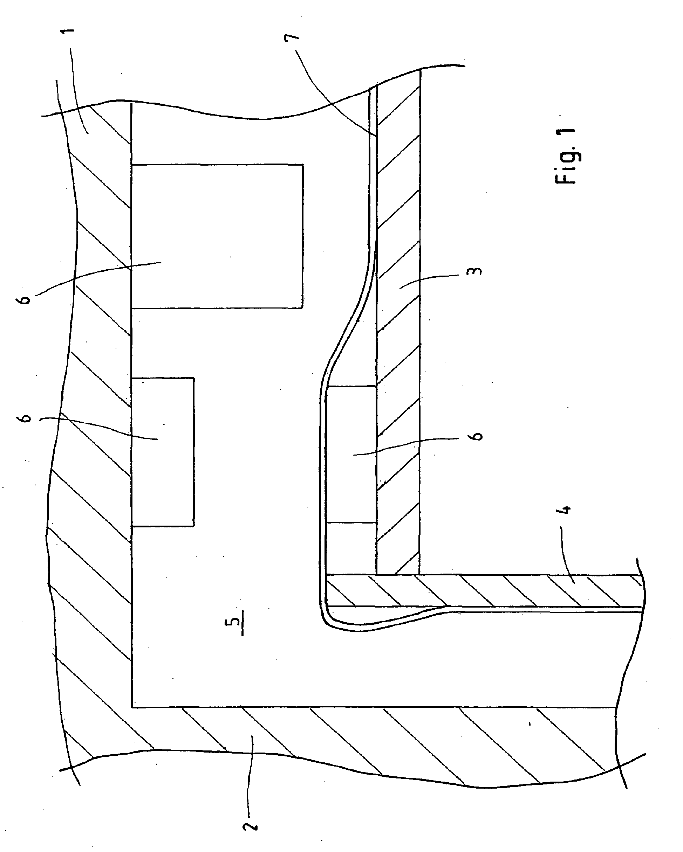

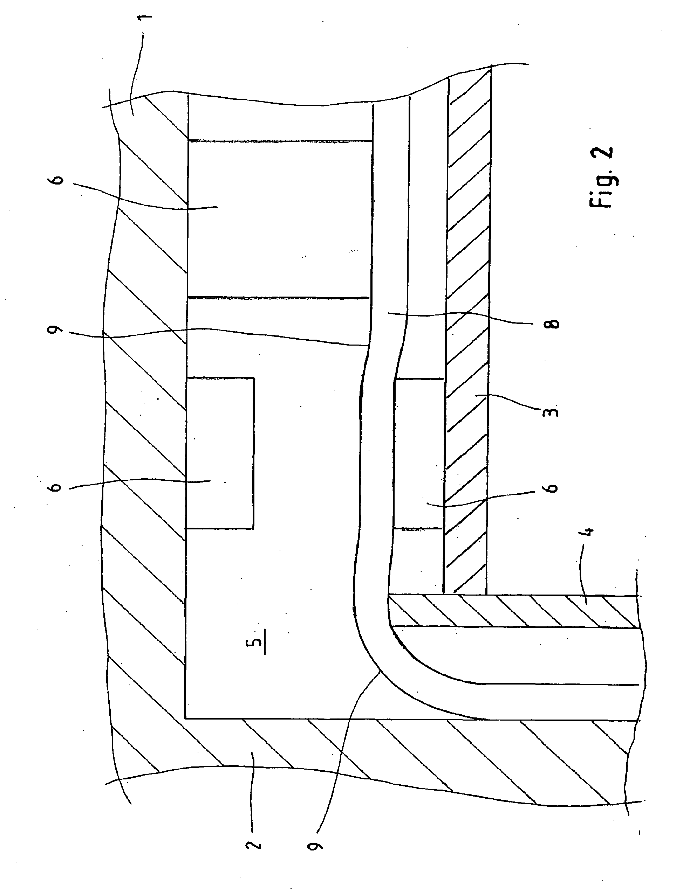

Die Figuren 1 und 2 zeigen in schematischer Darstellung einen Verlegeraum. Es ist konkret eine Raumdecke 1 sowie eine Raumwand 2 gezeigt. Zur Raumdecke 1 beabstandet ist eine Zwischendecke 3 vorgesehen. Die Raumwand 2 ist mit einer Vorwand 4 bestückt, die beabstandet zur Raumwand 2 ausgebildet ist. Der Verlegeraum 5 ist zwischen Decke 1 und Zwischendecke 3 einerseits sowie Raumwand 2 und Vorwand 4 andererseits ausgebildet.

Innerhalb des Verlegeraums 5 befinden sich Einbauten 6, beispielsweise in Form von Stromleitungskanälen, Wasserrohren für eine Sprinkleranlage und/oder dergleichen, wobei die Einbauten 6 im gezeigten Ausführungsbeispiel sowohl an der Raumdecke 2 als auch der Zwischendecke 3 angeordnet sind.

Der zur Verfügung stehende Verlegeraum 5 soll nun dazu genutzt werden, ein Lüftungsrohr zur Luftführung aufzunehmen.

Es kommt gemäß der Erfindung ein Schlauch 7 zum Einsatz, der als Schlauchmaterialkomponente wärmeaktivierbaren Kunststoff beinhaltet. Dieser Schlauch 7 kann in einfacher Weise innerhalb des Verlegeraums 5 verlegt werden, beispielsweise dadurch, dass dieser einendseitig durch den Verlegeraum 5 hindurchgeführt, beispielsweise gezogen wird. Figur 1 lässt den in den Verlegeraum 5 eingebrachten Schlauch 7 erkennen. In seinem Verlegezustand ist der Schlauch 7 schlaff und ähnlich wie ein aufgewickelter oder zusammengefalteter Feuerwehrschlauch von flacher Ausgestaltung.

Als dann wird der Schlauch einendseitig luft- und druckfest verschlossen. In den so verschlossenen Schlauch wird in einem weiteren Verfahrensschritt Warm- bzw. Heißluft eingebracht, wobei die Luft bevorzugter Weise eine Temperatur zwischen 60 C° und 70 C° aufweist. Infolge der Druckbeaufschlagung des Schlauches 7 mit Warm- bzw. Heißluft dehnt dieser sich aus, das heißt er wird aufgebläht, so dass ein Rohr 8 entsteht, wie dieses in Figur 2 gezeigt ist. Infolge der Warm- bzw. Heißlufteinbringung in den Schlauch 7 wird das Schlauchkunststoffmaterial thermoaktiviert. Der Druck innerhalb des Schlauches wird für eine bestimmte Zeit gehalten, beispielsweise für eine Zeit von zwei bis drei Minuten. Innerhalb dieser Zeitspanne härtet der thermoaktivierte Kunststoff aus, so dass das Rohr 8 auch nach Abführung der Warm- bzw. Heißluft seine Form, wie sie in Figur 2 dargestellt ist, beibehält.

Das auf die vorbeschriebene Weise ausgebildete Rohr 8 nutzt den zur Verfügung stehenden Verlegeraum 5 in optimierter Weise aus, wobei es infolge des Aufblähens des Schlauches 7 Krümmungen 9 annimmt, die es bei gegebenem Querschnitt sowohl an unter Umständen vorhandenen Einbauten 6 vorbeiführt, als auch um Verlegeecken herumführt.

Der besondere Vorteil der erfindungsgemäßen Ausgestaltung ist insbesondere darin zu sehen, dass ohne den Eingriff in vorhandene Baustrukturen der Schlauch 7 in vergleichsweise einfacher Weise auch im Bereich enger Verlegeräume 5 verlegt werden kann. Infolge des anschließenden Aufblähens nimmt der Schlauch zur Ausbildung des Rohres eine optimierte und an die durch den Verlegeraum 5 vorgegebene Umgebung angepasste Ausgestaltung an, so dass der zur Verfügung stehende Raum in optimierter Weise ausgenutzt werden kann.

### Bezugszeichen:

- 1: Decke
- 2: Raumwand
- 3: Zwischendecke
- 4: Vorwand
- 5: Verlegeraum
- 6: Einbauten
- 7: Schlauch
- 8: Rohr
- 9: Krümmung

## Patentansprüche

1. Verfahren zur Ausbildung eines Lüftungsrohres innerhalb eines zwischen einer Raumwand (2) und einer Vorwand (4) und einer Raumdecke (1) und einer Zwischendecke (3) eines Gebäudes ausgebildeten Verlegeraumes (5), wobei ein flexibles schlauchförmiges Material bereitgestellt wird,
- das Material mit einem aushärtbaren, thermoaktivierbaren Kunststoff versehen wird,
- der Schlauch (7) verlegt wird,
- der Schlauch (7) mit Warmluft beaufschlagt wird und der Kunststoff ausgehärtet wird.

2. Verfahren nach einem der vorhergehenden Ansprüche, **dadurch gekennzeichnet, dass** der flexible Schlauch (7) aus einem Kunststoff gebildet wird.

3. Verfahren nach Anspruch 2, **dadurch gekennzeichnet, dass** als Kunststoff ein aushärtbarer Kunststoff verwendet wird.

4. Verfahren nach einem der vorhergehenden Ansprüche, **dadurch gekennzeichnet, dass** der Schlauch (7) mit einer inneren glatten Oberfläche ausgebildet wird.

5. Verfahren nach einem der vorhergehenden Ansprüche, **dadurch gekennzeichnet, dass** der Schlauch (7) hinsichtlich des Querschnittes geformt wird.

6. Verfahren nach einem der vorhergehenden Ansprüche, **dadurch gekennzeichnet, dass** der Schlauch (7) in Befestigungsbügeln gehängt wird.

7. Lüftungsrohr (8), hergestellt nach dem Verfahren nach einem der vorhergehenden Ansprüche, wobei dieses nach dem Aushärten eines aushärtbaren Kunststoffes mit einer inneren glatten Oberfläche biegesteif ist.

## Claims

1. A method for producing a ventilation pipe inside a room for laying pipes (5) between a room wall (2) and a front wall (4) and a room ceiling (1) and a suspended ceiling (3) of a building, wherein a flexible tubular material is provided,
- the material is provided with a hardenable, thermoactivatable plastic,
- the hose (7) is laid,
- warm air is applied to the hose (7) and the plastic is hardened.

2. A method according to one of the preceding claims, **characterized in that** the flexible hose (7) is made of a plastic.

3. A method according to claim 2, **characterized in that** a hardenable plastic is used as plastic.

4. A method according to one of the preceding claims, **characterized in that** the hose (7) is formed with a smooth inner surface.

5. A method according to one of the preceding claims, **characterized in that** the hose (7) is formed with respect to the cross section.

6. A method according to one of the preceding claims, **characterized in that** the hose (7) is hung in mounting brackets.

7. A ventilation pipe (8), produced according to the method according to one of the preceding claims, wherein this one will be bend-proof with a smooth inner surface after the hardening of a hardenable plastic.

## Revendications

1. Procédé de fabrication d'un tuyau de ventilation à l'intérieur d'un espace pour poser des tuyaux (5) entre une paroi d'une pièce (2) et une paroi avant (4) et un plafond d'une pièce (1) et un parement de plafond (3) d'un édifice, dans lequel un matériau flexible sous forme de tuyau est fourni,
- le matériau est pourvu d'une matière plastique durcissable et thermoactivable,
- le tuyau (7) est posé,
- de l'air chaud est appliqué au tuyau (7) et la matière plastique est durcie.

2. Procédé selon l'une des revendications précédentes, **caractérisé en ce que** le tuyau flexible (7) est fabriqué en une matière plastique.

3. Procédé selon la revendication 2, **caractérisé en ce qu'**une matière plastique durcissable est utilisée en tant que matière plastique.

4. Procédé selon l'une des revendications précédentes, **caractérisé en ce que** le tuyau (7) est configuré avec une surface intérieure lisse.

5. Procédé selon l'une des revendications précédentes, **caractérisé en ce que** le tuyau (7) est formé par rapport à la section transversale.

6. Procédé selon l'une des revendications précédentes, **caractérisé en ce que** le tuyau (7) est fixé à des étriers de fixation.

7. Tuyau de ventilation (8) fabriqué selon le procédé selon l'une des revendications précédentes, dans lequel celui-ci est rigide en flexion avec une surface intérieure lisse après le durcissement d'une matière plastique durcissable.
